# EUROPEAN PATENT APPLICATION

(11) **EP 4 421 311 A1**
(43) Date of publication of application: **28.08.2024**
(21) Application number: 23158226.3
(22) Date of filing: 23.02.2023
(51) Int. Cl.: F03D 1/06, F03D 80/50

(54) **METHOD FOR LOWERING AND/OR LIFTING AND METHOD FOR SERVICING A ROTOR BLADE OF A WIND TURBINE**

(71) Applicant: Siemens Gamesa Renewable Energy A/S, 7330 Brande (DK)
(72) Inventor: Gade Soerensen, Thomas Justmi, 9000 Aalborg (DK); Hansen, Carsten Keller, 7400 Herning (DK)
(74) Representative: SGRE-Association

(57) **Abstract**

Method for lowering and/or lifting a rotor blade (3) of a wind turbine (1) to change the distance (6) between an end face (7) of a blade root (8) of the rotor blade (3) and a contact surface (64) of a blade bearing (8) of the rotor blade (3), comprising the steps of providing multiple actuators (27-34), in particular at least four actuators (27-34), each actuator (27-34) having a first portion (48) and a second portion (49), wherein the second portion (49) is moveable in a respective actuator movement direction (50, 55) with respect to the first portion (48) by controlling the actuator (27-34), wherein the respective first portion (48) is coupled to the blade bearing (9) and the respective second portion (49) is coupled to the rotor blade (3) in such a way that all actuator movement directions (50, 55) deviate by less than 20° or less than 10° or less than 5° from the vertical direction (14, 15) when the rotor blade is in the given orientation (42), controlling the actuators (27-34) to lower and/or rise the rotor blade (3) while the rotor blade (3) is in the given orientation (42) in such a way that a first group (35) of the actuators (27-34) each exert a vertical upward force on a first circumferential section (40) of the blade root (8), and that a second group (36) of the actuators (27-34) exerts a vertical downward force on a second circumferential section (41) of the blade root (8).

## Description

### FIELD OF THE INVENTION

The invention concerns a method for lowering and/or lifting a rotor blade of a wind turbine, in particular for servicing the rotor blade. Additionally, the invention concerns a method for servicing a rotor blade of a wind turbine.

### BACKGROUND

In wind turbines it can become necessary to service or replace the rotor blades. An exemplary use case is the refurbishing of the end face of the blade root of a rotor blade. Such a refurbishment can, e.g., become necessary when lubricant enters between the contact surface of the blade bearing, e.g., formed by a reinforcement plate of the bearing, and the end face of the blade root. Lubricant, e.g., grease, can cause increased wear and tear of the blade root, especially when the blade root is formed from fiber reinforced materials. It can therefore be necessary to refurbish the end face of the blade root or even to replace the blade when such a refurbishment is not performed in time.

Since the end face of the blade root is typically in contact with a contact surface of a blade bearing, it is not accessible while the blade is mounted to the bearing. It has therefore been necessary so far, to unmount the blade from the bearing and lower it completely to the ground in order to perform a servicing of the end face of the blade root. Therefore, such a service requires a crane or jack-up vessel and causes a long down-time of the wind turbine.

The dismounting and disengagement of a rotor blade from the blade bearing and also the mounting, e.g., after a servicing of the blade, can be especially challenging, when a coned rotor, that is e.g., discussed in the document WO 2013 / 091 635 A1, is used. In such a coned rotor, the blades are bend or angled forward in the up-wind direction from the blade root, therefore increasing the distance from the tower during operation. In this case, or in general when the center of gravity of the blade cannot be placed directly below the center of the blade bearing while the blade is attached to the bearing, it is typically not sufficient to just support the blade in the area of the blade root during the mounting or dismounting, since the unavoidable horizontal offset of the center of gravity with respect to the blade root would cause a strong torque on the rotor blade, leading to a tilting of the rotor blade that could potentially damage components of the wind turbine. Therefore, an additional support, typically in the area of the blade tip, is required. Such an additional support requires a crane or jack-up vessel.

The purpose of the present invention is therefore to provide an improved approach for servicing a rotor blade or in general to lowering and/or lifting a rotor blade while the respective rotor blade is in a given orientation, wherein the improved approach in particular avoids or at least reduces the necessity of supporting the blade by external devices, e.g., by a crane or a jack-up vessel.

### SUMMARY

According to an aspect, the problem is solved by providing a method for lowering and/or lifting a rotor blade of a wind turbine to change the distance between an end face of a blade root of the rotor blade and a contact surface of a blade bearing of the rotor blade, in particular for the purpose of servicing the rotor blade, comprising the steps of providing multiple actuators, in particular at least four actuators, each actuator having a first portion, in particular a hydraulic cylinder, and a second portion, in particular a piston, wherein the second portion is moveable in a respective actuator movement direction with respect to the first portion by controlling the actuator, wherein the respective first portion is coupled to the blade bearing and the respective second portion is coupled to the rotor blade in such a way that all actuator movement directions deviate by less than 20° or less than 10° or less than 5° from the vertical direction when the rotor blade is in a given orientation, controlling the actuators to lower and/or rise the rotor blade while the rotor blade is in the given orientation in such a way that a first group of the actuators each exert a vertical upward force on a first circumferential section of the blade root, and that a second group of the actuators exerts a vertical downward force on a second circumferential section of the blade root.

In particular the problem is solved by providing methods according to the independent claims.

By applying forces in two at least essentially opposite vertical directions in different circumferential sections of the blade root, a torque around a virtual axis extending across the blade root is exerted on the rotor blade. It was found that this torque can compensate a torque that can result when the center of gravity of the blade is horizontally offset from the center of the area below the end face, e.g., due to the use of rotor blades with a cone angle.

As an example, the use of rotor blades having their center of gravity up-wind from the blade bearing of the respective rotor blade leads to a tilting force towards the tower, when the blade is pointing essentially vertically downward. This tilting force is typically absorbed by the contact surface of the blade bearing that can support the end face of the blade root during the normal operation of the wind turbine. When the blade is lowered, this support does no longer apply and the resulting torque would exert a bending force on components, e.g., bolts used to guide the blade root during movement.

To avoid damaging these components, an additional support, e.g., by a crane or a jack-up vessel, would normally be necessary to compensate the torque. By actively applying forces in opposite directions in different circumferential sections of the blade root, the torque caused by the offset center of gravity of the rotor blade can be compensated without additional external devices. While this approach can lead to an additional stress on the actuators and/or components, e.g., bolts used to connect the respective actuator to the rotor blade, this additional stress will typically be compression stress, e.g., in the longitudinal direction of a bolt, and is therefore easily handled by common components.

The end face of the blade root can be in contact with the contact surface of the blade bearing during normal operation of the wind turbine. For most wind turbines and purposes, e.g., for servicing the end face of the blade root of the rotor blade as discussed below, it is sufficient to lower the blade by 145 mm to 160 mm. In an exemplary setup used during development of the invention, a lowering by 150 mm was robustly, safely, and repeatably possible at a wind speed mean value over a 10 minute interval of up to 8 m/s. The operation should be limited to wind speeds below a given threshold, the threshold depending on the concrete implementation.

The first and second circumferential section of the blade root are mutually different and can, in particular, be non-overlapping.

Preferably the first and second group of actuators each comprise at least two actuators. It is however also possible, that the first and/or second group comprises only a single actuator. The actuators can, e.g., be approximately equally spaced along in the circumferential direction of the blade root. Preferably both circumferential sections have approximately the same size. The first and/or second group can comprise subgroups of actuators, that are commonly controlled to reduce the complexity. It is, e.g., possible to use a common pump to apply an essentially equal pressure to hydraulic actuators within a given subgroup. In an exemplary embodiment, each group can comprise four actuators divided into two subgroups, each comprising two actuators. In particular each subgroup can be assigned to a circumferential section spanning approximately 90°.

The actuators can preferably be mounted specifically for a task requiring the lifting and/or lowering of the rotor blade, e.g., for servicing, mounting and/or unmounting one of the blades of a wind turbine. The actuators can later be unmounted and optionally be removed from the wind turbine, e.g., to be used in a different wind turbine at a later point in time. This can keep the weight of the moving parts of the wind turbine low and save resources, since the same actuators can be used in different wind turbines. In this case the steps of mounting and/or unmounting the actuators can be considered to be additional steps in the discussed method.

Alternatively, the actuators could be permanently installed in the wind turbine, e.g., during the construction of the wind turbine, and/or remain there after the current task is done. In general, the mounting and/or unmounting of the actuators can happen outside of the claimed method.

As a preliminary step, a hub, a rotor, or any other component carrying the blade bearing can be oriented to match the given orientation. In the given orientation the rotor blade can be essentially vertical or at least approximately as vertical as it can be while being mounted to the bearing.

The term "given orientation" of the rotor blade can in particular describe an orientation of the rotor blade, in which a lowering and/or servicing of the rotor blade is to be performed and could also be labeled as "service orientation". In particular the term "given orientation" can refer to an orientation of the rotor blade, in which the axis of rotation of the rotor bearing is vertical or deviates from the vertical direction by less than 20° or less than 10° or less than 5°. Additionally or alternatively, the end face of the blade root can be essentially horizontal in the given orientation.

The lowering and/or lifting of the rotor blade and therefore the movement direction of the actuators can be essentially parallel to an axial direction of the blade bearing. The axial direction can coincide with the rotational axis of the rotor blade when the rotor blade is rotated via the blade bearing. In the given orientation of the rotor blade, the axial direction of the blade bearing can be essentially vertical. Based on this axial direction, a local coordinate system comprising the radial direction and the circumferential direction with respect to the blade bearing and therefore the contact surface and the end face of the blade root can be defined.

By rotating the rotor of the wind turbine, the local coordinate system discussed above can be moved and reoriented. In the global coordinate system, the vertical direction typically coincides with the main direction of extension of a tower of the wind turbine. Within the horizontal plane the wind direction is especially relevant and an up-wind and a down-wind direction can be distinguished. During the normal operation of the wind turbine, the hub or in general the part of the rotor carrying the rotor blades will be oriented in the up-wind direction. Therefore, the up-wind direction is equivalent to a forward direction and typically the direction facing away from the nacelle and/or the tower of the wind turbine. In other words, it is assumed, that the rotor blades are arranged in the up-wind direction from the tower and that the position of the tower is in the down-wind direction from the rotor blades.

When directions are given as essentially parallel or essentially orthogonal or essentially vertical or essentially horizontal, typically a tolerance of up to 20° or up to 10° is considered as fulfilling these requirements when no other threshold is given.

The respective actuator can be a hydraulic actuator. The first portion of the respective actuator can be or comprises a hydraulic cylinder and the second portion be or comprises a piston. Hydraulic actuators can provide large forces, even when using a rather small hydraulic cylinder, and allow for an exact positioning. The actuation of the piston can be provided by a hydraulic pump, that can in particular be spaced apart from the respective actuator, e.g., be located in a nacelle of the wind turbine.

In a preferred embodiment of the method, no crane and/or no jack-up vessel is used while lowering and/or lifting and/or servicing the rotor blade. In particular, no additional means to compensate the torque caused by the position of the center of gravity of the rotor blade during the lowering and/or lifting and/or servicing of the blade is used in the inventive method. This torque can therefor be exclusively compensated by the described application of opposite vertical forces by the actuators.

In the given orientation of the rotor blade, the first portion of each actuator in the first group can be arranged vertically below at least a part of the second portion of the respective actuator. As already discussed above, the first group is configured for providing an upward force. In various actuators, in particular in hydraulic actuators, specifically in hydraulic actuators using only the pressure in a single chamber to move the piston and/or having only a single hydraulic connection to a pump or some other means for pressurization, larger forces can be applied when moving the second portion, e.g., the piston, outward from the first part and therefore upward in the described arrangement.

Additionally or alternatively, the first portion of each actuator in the first group can have a first portion end face that is facing vertically downward in the given orientation of the rotor blade and that is supported by a support plate that is in turn supported by the blade bearing. As discussed above, the actuators of the first group should mainly exert upward forces and a support from below is therefore advantageous.

In the given orientation of the rotor blade the first portion of each actuator in the second group can on the one hand be arranged vertically above at least a part of the second portion of the respective actuator and/or can on the other hand have a first portion end face that is facing vertically upward and that is supported by a support plate, which support plate can be attached to the bearing.

Since the second group is configured for mainly providing forces in the downward direction, the arrangement of the portions of the respective actuator and/or the location of the support plate should advantageously be inverted when compared to the first group.

The respective second component of the respective actuator can be coupled to the rotor blade via at least one actuating bolt that extends through a respective hole of the blade bearing, wherein the actuating bolt is movable with respect to the hole in the movement direction of the respective actuator.

A respective actuator of the first group can preferably comprise two actuating bolts. The first portion of the actuator can be arranged between the two actuating bolts in the circumferential direction of the blade bearing and a cross bar connecting the actuating bolts can form a stop for the second component, therefore allowing the second component to push the actuating bolts upward and therefore exert an upward force on the blade root.

In a respective actuator of the second group, the second portion, e.g. a piston, can push a single actuating bolt downward in the given orientation of the rotor blade.

The respective actuating bolt can have a threaded end for attaching it to a threaded hole in the end face of the blade root.

The rotor blade can be coupled to the blade bearing by multiple holding bolts during the normal operation of the wind turbine. The respective holding bolt can extend through a respective hole in the blade bearing. The step of providing the multiple actuators can than comprise the sub-steps of:
removing a subgroup of the holding bolts from the respective holes, and
passing a respective actuating bolt through at least some of the holes of the subgroup and connecting the respective actuating bolt to the rotor blade.

In other words, some of the holes used for a bolt connection of the blade root to the bearing can be used to guide the actuating bolts. The holding bolts can be shorter than the actuating bolts and, e.g., only extend a few centimeters beyond the hole to allow for an attachment of a nut. By tightening the nut, the end surface of the rotor blade is held tightly against a contact surface of the bearing. The actuating bolts should be sufficiently long to still extend through the hole once the blade is fully lowered.

The actuating bolts can only occupy a fraction of the holes used for the holding bolts. Most of the holding bolts can remain installed, until the actuators are operational and able to hold the rotor blade in position. Afterwards the remaining holding bolts can be removed to allow for a lowering of the blade.

Some of the holding bolts that are not replaced by the actuating bolts can be removed in an earlier step, e.g., before mounting the actuators. It is, e.g., possible, that some of the holding bolts are impossible or at least hard to remove, when the blade is approximately vertical or in general in the given orientation. Those bolts can be removed before the blade is moved to the given orientation.

Some additional holding bolts can also be removed to make room for additional components, e.g., for holding the first portion of the respective actuator in place. The removal of these holding bolts can preferably be performed, once the given orientation of the rotor blade is reached.

A reorientation of the blade to the given orientation, e.g., to approximately match the axial direction of the blade bearing to the vertical direction, can be achieved by rotating the rotor of the wind turbine. Optionally the blade itself can also be rotated in the blade bearing to reach the given orientation. Actuators for rotating the rotor and/or the blades in a wind turbine are present in most wind turbines and well known in the art.

After lifting the blade to the original position, e.g., after servicing the blade, the discussed steps can be performed in reverse order to remove the actuators and reinstall the holding bolts.

The step of providing the actuators can comprise the additional sub-step of inserting and anchoring a respective expansion anchor into at least some of the holes of the subgroup that are not used for the actuating bolts, wherein the respective first part of the actuators of the second group is coupled to the rotor bearing via at least one of the expansion anchors.

Since the actuators of the second group of actuators are configured for exerting/applying a downward force onto the blade root, an upward movement of the first part of the actuators of the second group needs to be blocked. An efficient way to achieve this is an anchoring of the respective actuator to the bearing via the expansion anchor.

An expansion anchor can, e.g., be formed by using a bolt with an expansion wedge that is fed through an expansion sleeve. When the expansion wedge is drawn into the expansion sleeve, e.g., by tightening a nut on the side of the bolt extending beyond the respective hole, the sleeve is expanded and locks the expansion anchor inside the hole by frictional forces. It can be advantageous, to check for a sufficient frictional force of the expansion anchor by controlling the respective actuator to apply a force that matches or exceeds the largest force needed during the lowering and/or lifting of the blade, while the rotor blade is still attached by at least some of the holding bolts.

A respective sensor can be used to measure the respective relative position of the first and second portion of at least two of the actuators, in particular of at least one respective actuator of the first and second group, wherein the actuators are controlled based on the measured relative positions. Forces on the actuators due to, e.g., a variation in the wind speed and/or other external factors and/or tolerances in the actuators and/or in the control of the actuators can cause an offset in the relative movement between individual actuators or between the subgroups and/or the groups of actuators. This can cause stress in components, in particular in the actuating bolts, and/or additional friction due to a tilting of the actuating bolts in the holes. This can be avoided by controlling the actual movement. Position sensors for an essentially linear movement are well known. E.g., ultrasonic distance sensors or magnetic movement sensors can be used. Preferably a respective sensor is used for each individual actuator or for each subgroup of commonly controlled actuators.

Additionally, the invention concerns a system for lowering and/or lifting a rotor blade of a wind turbine to change the distance between an end face of a blade root of the rotor blade and a contact surface of a blade bearing of the rotor blade, in particular for the purpose of servicing the rotor blade, comprising
multiple actuators, in particular at least four actuators, each actuator having a first portion, in particular a hydraulic cylinder, and a second portion, in particular a piston, wherein the second portion is moveable in a respective actuator movement direction with respect to the first portion by controlling the actuator, and
a control unit configured for controlling the actuators to lower and/or rise the rotor blade while the rotor blade is in the given orientation in such a way that a first group of the actuators each exert a vertical upward force on a first circumferential section of the blade root, and that a second group of the actuators exerts a vertical downward force on a second circumferential section of the blade root,
when the system is installed in the wind turbine in such a way that the respective first portion of each actuator is coupled to the blade bearing and the respective second portion is coupled to the rotor blade in such a way that all actuator movement directions deviate by less than 20° or less than 10° or less than 5° from the vertical direction when the rotor blade is in a given orientation.

The system can be configured for implementing an embodiment of the inventive method discussed above, when the system is installed inside a wind turbine. Additionally or alternatively, any features discussed above with respect to the inventive method can also be used in the inventive system with the advantages given above and vice versa.

Additionally, a wind turbine is disclosed, that comprises multiple actuators configured for implementing the inventive method for lowering and/or lifting a rotor blade of the wind turbine to change the distance between an end face of a blade root of the rotor blade and a contact surface of a blade bearing of the rotor blade, in particular for the purpose of servicing the rotor blade, is disclosed. Further advantageous features of such a wind turbine where already discussed with respect to the method and can be transferred to the disclosed wind turbine with the given advantages and vice versa.

The invention also concerns a wind turbine comprising at least one rotor blade having a blade root and an end face of the blade root and a rotor bearing having a contact surface that is contacting the end face during the normal operation of the wind turbine wherein the system according to the present invention, discussed above, is part of the wind turbine and installed in such a way that the respective first portion of each actuator is coupled to the blade bearing and the respective second portion is coupled to the rotor blade in such a way that all actuator movement directions deviate by less than 20° or less than 10° or less than 5° from the vertical direction when the rotor blade is in the given orientation.

The wind turbine can be configured for implementing an embodiment of the inventive method discussed above. Additionally or alternatively, any features discussed above with respect to the inventive method and/or system can also be used in the inventive wind turbine with the advantages given above and vice versa.

The invention also concerns a method for servicing a rotor blade of a wind turbine, comprising the steps of
lowering the rotor blade to expose an end face of a blade root of the rotor blade that is contacting a contact surface of a blade bearing of the wind turbine during the normal operation of the wind turbine, wherein the blade is lowered using at least one actuator, the actuator having a first portion that is coupled to the blade bearing of the rotor blade a second portion that is coupled to the rotor blade,
servicing the end face of the blade root while the rotor blade is coupled to the blade bearing via the actuator, and
lifting the rotor blade using the actuator to move the end face of the blade root into contact with the contact surface.

Typically, the rotor blade is rigidly attached to the blade bearing, e.g., to the inner or outer ring of the blade bearing, during the normal operation of the wind turbine. The respective other ring can, e.g., be connected to the hub or in general the rotor of the wind turbine. Therefore, it might additionally be necessary to loosen the connection of the blade to the bearing, e.g., by removing holding bolts used for this connection. At least some of the holding bolts or other connection means should typically remain, until the actuators are operational. The connection is preferably restored, e.g., holding bolts are reattached, after the lifting of the rotor blade.

The actuator can be permanently installed in the wind turbine. Preferably the actuator is however only installed when a servicing or in general a lowering of the rotor blade is required. Possible approaches for an installation of the actuator where already discussed above.

The servicing of the end face of the blade root can comprise a cleaning and/or milling and/or coating of the end face.

A cleaning can in particular be performed to remove grease or other lubricants. Lubricants used to lubricate the blade bearing can, e.g., enter between the bearing or more specifically an outer support plate of the bearing and the blade root, since small gaps between these components can result during operation. This can cause an increased wear and tear in the sections of the end face of the blade root covered by grease. Therefore, a cleaning can be advantageous.

When the blade root is already damaged, the damaged area can be removed by milling. Advantageously, this is compensated by using a shim plate, as discussed below.

By applying a coating, in particular after cleaning and/or milling the surface and preferably prior to the attachment of an optional shim plate, future damage can be avoided or at least reduced. It was found that epoxy resin or another two-component adhesive, e.g., Araldite^{®} 2022, can strongly reduce future damage to the blade root. The coating can in particular be applied manually by service personal, e.g., by using a spatula.

The rotor blade can be coupled to the blade bearing by multiple holding bolts during the normal operation of the wind turbine, the respective holding bolt extending into holes of the end face of the blade root, as previously discussed. At least some of the holding bolts can be removed, in particular prior to the lowering of the rotor blade, leaving at least some of the holes of the end face of the blade root open. The milling can be performed using a milling device having at least one protrusion, wherein the respective protrusion can be inserted into a respective one of the open holes prior to the milling to define the position of the milling device and therefore the area of the end face of the blade root in which the milling is performed.

A precise definition of the milling area can be highly relevant, in particular when the milling is to be compensated using a shim plate, as discussed below. By using a single protrusion and open hole, the position of the milling device is sufficiently defined, but the orientation of the milling device is still flexible. The orientation can, e.g., be defined by guiding means of the milling device contacting the side wall of the rotor blade. A fixed orientation is however not strictly required, when a milling area with a rotational symmetry with respect to any angle is used, e.g., when the milling is performed using a rotating disc. Alternatively two or more protrusions can be inserted into respective holes to robustly define the position and orientation of the milling device.

A damage to the end face of the blade root is typically due to lubricant entering the gap between the bearing and the end face as discussed above. When holding bolts are used to attach the blade root to the bearing, the lubricant can typically not enter the area immediately surrounding the holding bolt and therefore the area of the end face close to the respective hole, since this area is tightly pressed to the contact surface of the bearing by the respective holding bolt. It can therefore be assumed, that the area surrounding the respective hole is not damaged and that this area can be used as a reference for the milling operation.

It can therefore be sufficient to mill the milled area to a plane that is parallel to the area surrounding the hole and offset with respect to this area by a given milling depth. This can, e.g., be achieved by using the area surrounding the hole as a stop that contacts a reference surface of the milling device when a sufficient milling depth is reached. The reference surface can, e.g., be a section of a disc used as a milling head positioned close to the center of the disc. Preferably an additional component, e.g., a guide bushing discussed below, can be placed on the area surrounding the hole to act as a stop to further improve the accuracy of the milling and/or protect the rotor blade.

Additionally or alternatively, a sensor of the milling device can capture the relative position and/or orientation of the milling head with respect to at least one point of reference, in particular located at the area surrounding a hole in the end face, to control the milling.

The respective removed holding bolt can in particular extend through a respective hole in the blade bearing, e.g., through an inner or outer ring of the blade bearing prior to its removal. The discussed holding bolts can in particular be the same holding bolts mentioned above. The holes in the end face of the blade root can be blind holes and/or threaded holes. As an alternative to threaded holes, a respective blade bushing with a thread could be mounted further down the blade root.

A guide bushing can be inserted into the respective open hole of the end face of the blade root. The guide bushing can comprise a hollow cylinder that is inserted into the open hole, and a flat, in particular ring shaped, area extending radially outward from one end of the cylinder. The flat area of the guide bushing can be placed on top of the area of the end face surrounding the hole. The respective protrusion of the milling device can be inserted into the hollow cylinder to insert the protrusion into the respective open hole.

The use of a bushing can especially be advantageous, when a rotating protrusion, e.g., a protrusion of a rotating disc used as a milling head, is used, to protect the interior wall of the respective hole, in particular when the hole is threaded. Additionally or alternatively, the bushing can provide a more precise stop and/or reference point for the milling.

The servicing of the end face of the blade root can comprise the attachment of at least one shim plate to the end face of the blade root. The shim plate can in particular be attached to an area of the end face in which material of the end face was removed by milling in a previous sub-step of the step of servicing the end face of the blade root to replace the removed material.

The shim plate is preferably attached mechanically, e.g., by at least one screw. Alternatively, the shim plate could, e.g., be glued to the end face.

When a coating is applied as part of the servicing of the rotor blade, the shim plate is preferably attached after the sub-step of coating the end face. Preferably the coating is dry, e.g., completely polymerized, prior to the attachment of the shim plate.

The shim plate preferably matches the shape, in particular the radius and width, of the end face. The extension in the circumferential direction of the end face is preferably chosen to match the milling area milled by a used milling tool. The thickness of the shim plate can be chosen to match the depth of the milling. When different milling depth can be used, shim plates with multiple thicknesses can be provided and/or a stack of multiple shim plates can be installed to match the depth of the milling.

The method for servicing the rotor blade can comprise the additional step of installing a work platform inside the rotor blade prior to lowering the rotor blade and/or the additional step of uninstalling the work platform after the lifting the rotor blade.

Rotor blades should be light weight during the operation of the wind turbine and do therefore typically not comprise a suitable internal work platform for service personal. Prior to the lowering of the blade, the interior of the blade can typically be accessed with relative ease, e.g., via a hole of a support plate of the blade bearing, e.g., while the blade is essentially horizontal, e.g., at an angle of less than 30° or less than 15° to the horizontal direction. The installed work platform can allow for good access to the end face of the blade root, even after lowering the blade, in particular while the blade is in the given orientation discussed above and/or essentially vertical, e.g., at an angle of less than 30° or less than 15° to the vertical direction.

The working platform can be essentially parallel, e.g., be at an angle of less than 30° or less than 15,° to the rotational plane of the blade bearing and/or to the end surface of the blade root after the installation and/or after lowering the blade.

The installed work platform can be inflatable or comprise an inflatable component. The work platform can be moved to the blade during the step of installing and/or removed from the rotor blade during the step of uninstalling of the work platform in a deflated state of the work platform or the inflatable component. The work platform or the inflatable component can be inflated during the step of installing and/or deflated during the step of uninstalling of the work platform.

The use of an inflatable work platform or component allows to fit a mostly assembled work platform through a typical service opening of a bearing support plate and therefore allows for a relatively fast installation and removal of the platform.

The inflated work platform can also have a certain amount of deformability, e.g., allowing the work platform to be slightly deformed when being pushed into position by service personal. It can, e.g., be inflated while lying essentially flat in an essentially horizontal rotor blade and then be tilted upward and pushed towards the tip of the rotor blade by service personal after the inflation to fit it into its final position.

It can be sufficient to secure the work platform by straps, e.g., connected to the bearing, since the work platform can essentially be held in the desired position by friction due to a deformation of the inflated platform and the straps only need to support or partially support the weight of the service personal when the blade is essentially vertical.

The method for servicing the rotor blade can comprise the additional steps of
arranging at least one spacer between the end face of the blade root and the contact surface of the blade bearing after lowering the blade and before servicing the end face of the blade root, and
removing at least one spacer before lifting the rotor blade after the servicing of the end face.

The use of spacers stabilizes the position of the blade with respect to the bearing during the servicing and can in particular decrease the loads on the actuating bolts discussed above. The respective spacer can cover only a small fraction, e.g., less than 10%, of the circumference of the end face of the blade root. It can have a fixed height that corresponds to the desired distance between the end face and the contact surface during servicing. Alternatively, a stack of thinner spacers can be used. Preferably multiple spacers or stacks of spacers are distributed along the circumference of the end face.

The spacer or spacers can be clamped between the end face and the contact surface, e.g., by first lowering the blade to create a gap that is wider than the spacers or stacks of spacers to be used, secondly inserting the spacers, and thirdly slightly lifting the rotor blade to clamp the spacers or stacks of spacers.

To allow for a robust positioning of the spacers, at least some of the spacers can have at least one recess, in particular two or more recesses, that each receive a respective one of the actuating bolts discussed above.

The lowering and/or the lifting of the rotor blade can be performed using the inventive method for lowering and/or lifting a rotor blade of a wind turbine that was disclosed above.

The invention also concerns a method for operating a wind turbine, in particular an offshore wind turbine, further in particular a floating offshore wind turbine, and/or for feeding electrical energy to an electricity grid, the method comprising the following steps:
executing steps of an embodiment or of a combination of embodiments of the methods as disclosed supra for lowering and/or lifting a rotor blade of the wind turbine and/or for servicing a rotor blade of the wind turbine,
generating, by the wind turbine, electrical power and/or electrical energy,
transmitting at least a part of the electrical power and/or of the electrical energy to an electrical receiving arrangement, in particular wherein the electrical receiving arrangement is not
positioned in international waters, is positioned onshore, and/or is positioned within a 12-miles-zone of a respective sovereign national state over which the respective state has jurisdiction,
supplying at least a part of the electrical power and/or of the electrical energy to an electrical utility grid, in particular to an onshore electrical utility grid.

It is to be understood that the features mentioned above, for example the use of actuating bolts and the use of a milling device, and those yet to be explained below can be used not only in the respective combinations indicated, but also in other combinations or in isolation, without leaving the scope of the present invention. In particular, the features of the different aspects, embodiments, and/or methods of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
- Fig. 1: is a schematic detailed view of a wind turbine showing an intermediate state in an embodiment of the inventive method for servicing a rotor blade of the wind turbine after an embodiment of the inventive method for lowering and/or lifting the rotor blade was used to lower the rotor blade,
- Fig. 2: is a schematic top view of one of the blade bearings shown in fig. 1, showing the distribution of the actuators used for lifting and/or lowering the rotor blade,
- Fig. 3: discloses a flow chart of an embodiment of the inventive method for lowering a rotor blade of a wind turbine,
- Fig. 4: is a schematic representation of an exemplary implementation of an actuator for applying a vertical upward force the method according to fig. 3,
- Fig. 5: is a schematic representation of an exemplary implementation of an actuator for applying a vertical downward force in the method according to fig. 3,
- Fig. 6: discloses a flow chart of an embodiment of the inventive method for servicing a rotor blade of a wind turbine,
- Fig.7: discloses a spacer usable in the method according to fig. 6,
- Fig. 8: is a schematic representation of the milling of the end face in the method according to fig. 6, and
- Fig. 9: discloses the resulting arrangement after the milling and the application of a shim plate in the method according to fig. 6.

### DETAILED DESCRIPTION

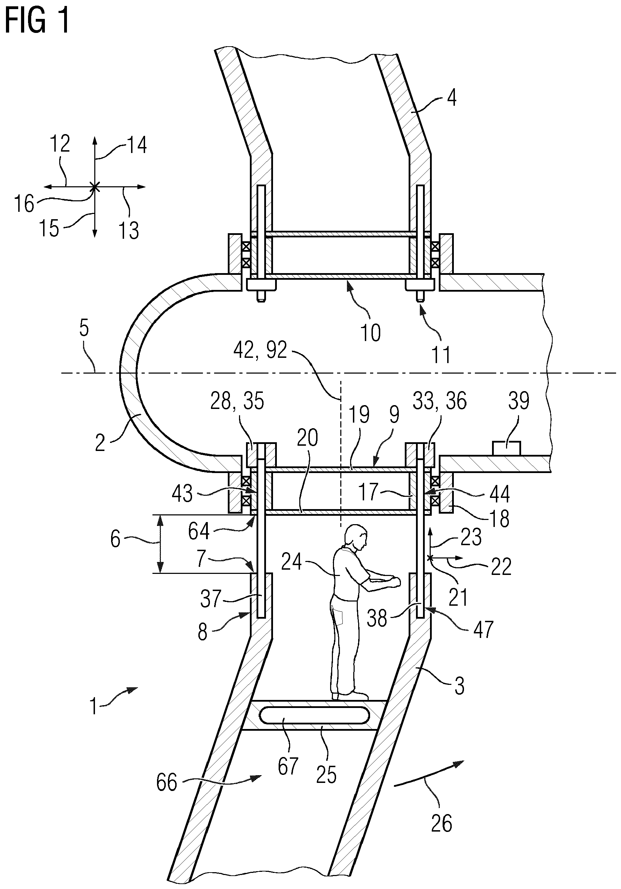

Fig. 1 is a schematic detailed view of a wind turbine 1, namely of a section of the rotor 2, specifically of the hub in the given example. The two rotor blades 3, 4 are shown to be attached to opposite sides of the rotor 2 for easier representation in a two-dimensional image. Obviously, the discussed methods can be used for wind turbines having a larger or smaller number of rotor blades, in particular for the common arrangement using three rotor blades spaced apart by 120° around the rotational axis 5 of the rotor 2. The rotor blade 3 is shown in the given orientation 42, in which the rotational axis 92 of the blade bearing 9 essentially matches the vertical direction and the rotor blade 3 is pointing downward.

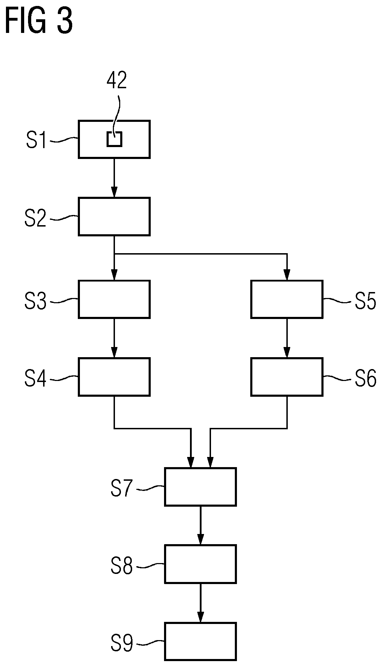

In fig. 1, the rotor blade 3 was lowered, in particular using the method that will later be discussed with reference to fig. 3, to increase the distance 6 between an end face 7 of a blade root 8 of the rotor blade 3 and a contact surface 64 of a blade bearing 9 of the rotor blade 3. During the normal operation of the wind turbine, the end face 7 is drawn tightly against the contact surface 64 by holding bolts 11, as shown for the other rotor blade 4 and the associated blade bearing 10 in fig. 1.

In the example the blade bearings are formed by an outer ring 18 mounted to the rotor 2, an inner ring 17 mounted to the blade root 8 of the respective rotor blade 3, 4 and inner and outer support plates 19, 20. For servicing the rotor blade 3 and for other purposes, e.g., to completely dismount the rotor blade 3, it is advantageous to first lower the rotor blade 3 as shown in fig. 1.

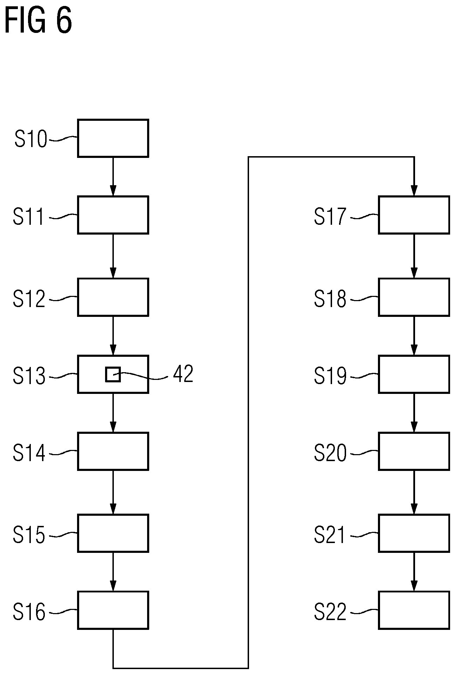

In the example, the lowering of the rotor blade 3 allows service personal 24 to service the end face 7 without having to detach the rotor blade 3 completely from the wind turbine 1, which would require a crane or a jack-up vessel. In the example an inflatable work platform 25 is provided to support the service personal 24. The servicing of the wind turbine will later be described in more detail with reference to the figs. 6 to 9.

Two distinct coordinate systems are used in the description. A global coordinate system can be defined by the up-wind direction 12 that points toward the front of the rotor 2 and away from the tower (not shown) and nacelle (not shown) of the wind turbine 1, the opposite down-wind direction 13 pointing towards the tower and the nacelle of the wind turbine 1, the cross-wind direction 16 and the upward vertical direction 14 and downward vertical direction 15. The up-wind direction 12, the down-wind direction and the cross-wind direction 16 lie in the horizontal plane.

A local coordinate system for the blade root 8 and its end face 7 as well as the inner ring 17 of the blade bearing 9 is also shown in fig. 1, showing the circumferential direction 21, the radial direction 22 and the axial direction 23 of the blade bearing 9.

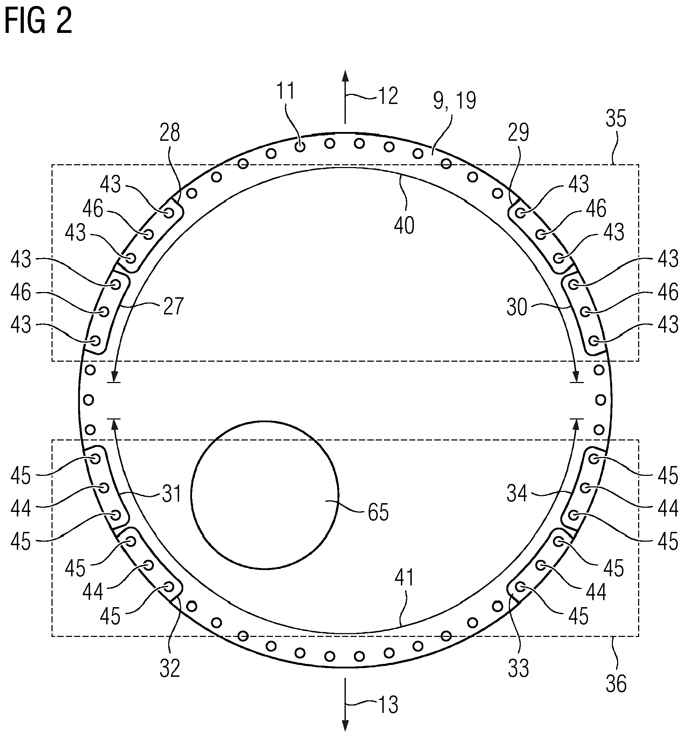

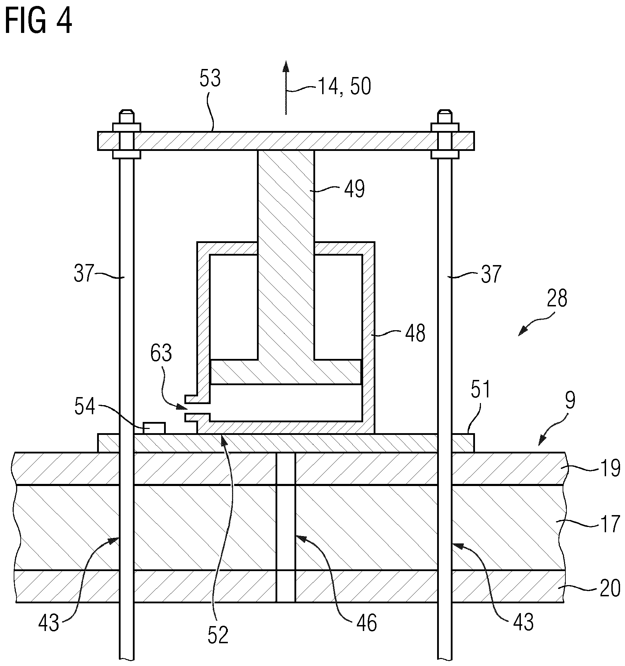

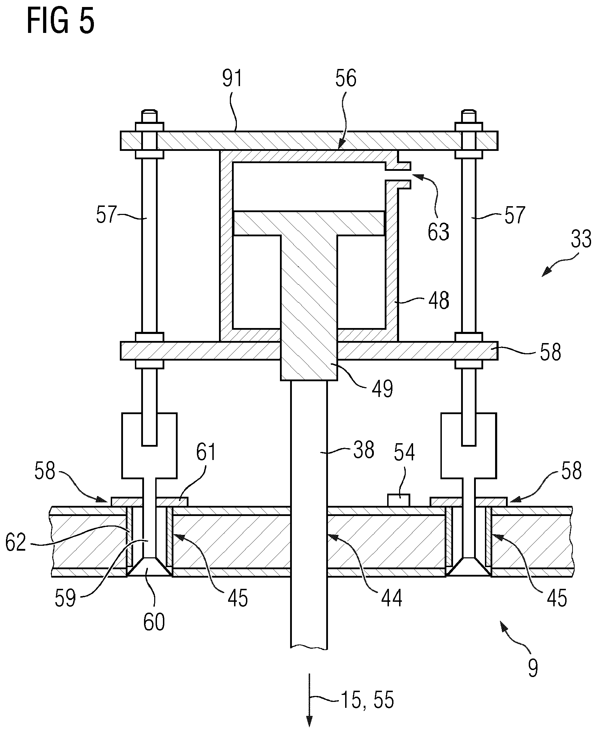

For lowering the rotor blade 3 to the position shown in fig. 1 multiple actuators 27 to 34 are used. An exemplary distribution of these actuators 27 to 34 along the circumference of the blade bearing 9 is shown in fig. 2, that shows a schematic top view of the blade bearing 9 and therefore of the inner support plate 19. For reasons of clarity, only simplified representations of two of the actuators 28, 33 are shown in fig. 1 and only the outlines of the actuators 27-34 are shown in fig. 2. Possible implementations for the actuators will later be discussed with reference to figs. 4 and 5.

In the example shown in fig. 1, lowering the rotor blade 3 is challenging, since the rotor blades 3, 4 are angled in the up-wind direction 12 to increase the distance of the blade tips from the tower. Therefore, the center of gravity of the respective rotor blade 3, 4 is shifted forward and therefore to the left in fig. 1 with respect to the center of the respective blade bearing, leading to a torque 26 on the rotor blade 3. This torque 26 is absorbed by the contact surface 64 of the blade bearing 9 during the normal operation of the wind turbine 1. When the rotor blade 3 is lowered, the contact surface 64 can no longer absorb the torque 26 and this torque would lead to a bending force on the actuating bolts 37, 38 of the actuators 27 to 34, potentially damaging these actuating bolts 37, 38 and further components of the wind turbine 1.

To avoid this problem, a control unit 39 for the actuators 27 to 34, that is only schematically shown in fig. 1 and could, e.g., also be placed outside of the rotor 2, controls the actuators 27 to 34 in such a way, that that a first group 35, comprising the actuators 27 to 30 in fig. 2, exerts a force in the upward vertical direction 14 on a first circumferential section 40 of the blade root 8, while a second group 36, comprising the actuators 31 to 34 in fig. 2, exerts a vertical downward force on a second circumferential section 41 of the blade root 8. These opposite forces applied in different circumferential sections 40, 41 of the blade root 8 result in a torque on the blade root 8 that is directed in the opposite direction of the torque 26 and can therefore compensate the torque 26 partially or even completely when the applied forces are chosen appropriately. Therefore, a bending force on the actuating bolts 37, 38 can be avoided or at least strongly reduced.

It should be noted, that the circumferential sections 40, 41 are indicated in fig. 2, where the blade root 8 itself is not visible, since it is hidden behind the blade bearing 9. This representation was chosen to more clearly indicate the relation between the groups 35, 36 of actuators 27 to 34 with the affected circumferential sections 40, 41.

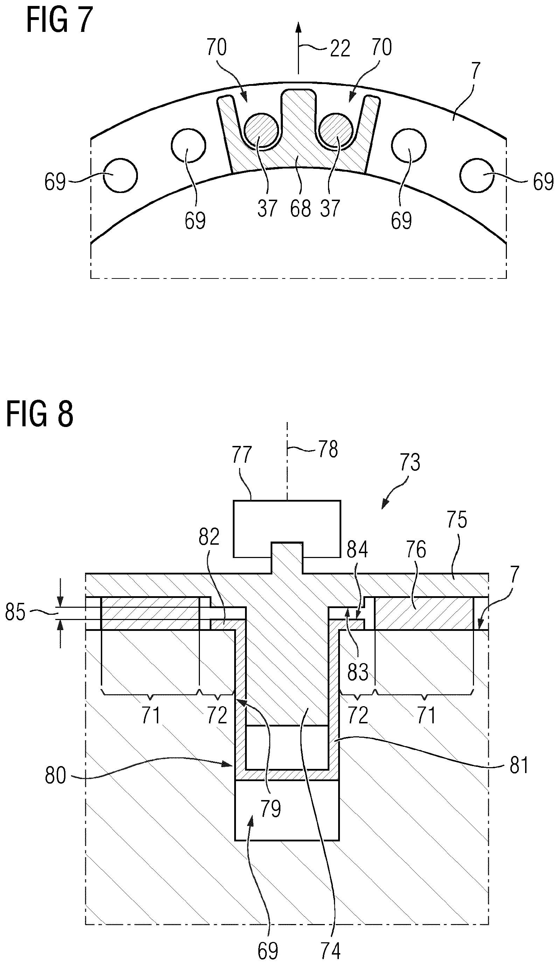

The discussed control can be performed during the lifting and lowering of the rotor blade 3, but also while the rotor blade 3 is held in place at a lowered position, at least while there are no spacers installed to compensate the torque 26. An example for a suitable spacer will later be given with reference to fig. 7.

A possible approach for lowering the rotor blade 3 to reach the position shown in fig. 1 will now be discussed in detail with additional reference to the flow chart given in fig. 3.

In step S1 the rotor blade is oriented in the given orientation 42 by rotating the rotor 2 with respect to the nacelle and/or tower (not shown) and/or the inner ring 17 of the rotor bearing 9 with respect to the outer ring 18. In the given orientation 42 the rotor blade 3 is essentially oriented towards the downward vertical direction 15. Prior to this rotation, additional optional steps could be performed, in particular steps that are impossible or hard to perform in the given orientation 42. One example would be the removal of some of the holding bolts 11, that might be inaccessible in the given orientation of the rotor blade. Another example would be the installation of the working platform 25 that will be discussed in more detail later.

In step S2, the sub-group of the holding bolts 11 that extend through a respective one of the holes 43 to 46 of the blade bearing 9 marked in fig. 3 and therefore the holding bolts 11 in areas, were the actuators 27 to 34 are to be installed, are removed from the respective holes 43 to 46, e.g., by unscrewing them from the respective threaded hole 47 of the end face 7 of the blade root 8 shown in fig. 1. The same reference numeral is used for all of the holes 42 to 46 serving the same function.

In step S3 the actuating bolts 37 of the actuators 27 to 30 of the first group 35 are inserted through the holes 43 and connected to the rotor blade 3, e.g., by screwing them into the respective threaded hole 47. In the example two separate actuating bolts are used for each of the actuators 27 to 30. This will be explained in more detail with additional reference to fig.4, which is a schematic representation of an exemplary implementation of an actuator 28 for applying a vertical upward force.

In step S4 the further components of the actuators 27 to 30 that are shown in fig.4 are mounted.

The exemplary actuator 28 of the first group 35 shown in fig. 4 does have a first portion 48 that is formed as a hydraulic cylinder in the example, and a second portion 49 that is formed as a piston in the example. The second portion 49 is moveable in an actuator movement direction 50, that essentially coincides with the upward vertical direction 14, when the rotor blade 3 is in the given position 42.

The first portion 48 is coupled to the blade bearing 9 in the area of the inner ring 17 via a support plate 51 that supports the bottom-end face of the first portion 48. The second portion 49 is coupled to the rotor blade 3. Namely the second portion 49 is coupled to a cross bar 53 that is rigidly coupled to the actuating bolts 37, that pass through the holes 43 of the blade bearing 9 and are in turn rigidly connected to the blade root 8, as previously discussed and shown in fig. 1. The hole 46 can remain open.

As already discussed in the general part of the description, the design of the actuator 28 is especially suited to apply upward forces when the rotor blade 3 is in the given position 42. A sensor 54 can be used to monitor the actual movement of the actuator 53.

In step S5 the actuating bolts 38 of the actuators 31 to 34 of the second group 36 are inserted through the holes 44 and connected to the rotor blade 3, e.g., by screwing them into the respective threaded hole 47.

In step S6 the further components of the actuators 31 to 34 are mounted.

Fig.5 is a schematic representation of an exemplary implementation of an actuator 33 for applying a vertical downward force. Since the force is to be applied in the opposite direction, the vertical arrangement of the first and second portion 49 and 50 are switched when compared to fig. 4. The first portion 48 is held between two support plates 58, 91 in the example, one of them being arranged above the upper end face 56 of the first portion 48 to support the first portion when a downward force is applied by the actuator 33.

The support plates are attached to two extension bolts 57, that are held in place by a respective expansion anchor 58. The respective expansion anchor is formed by a bolt 59 having an expansion wedge 60 that is fed through an expansion sleeve 62. When the nut 61 is tightened, the expansion wedge 60 is pulled upward in fig. 5, thereby pushing apart the expansion sleeve 62 to hold the expansion anchor 58 in place in the respective hole 45 by frictional force.

As already discussed in the general part of the description, the design of the actuator 33 is especially suited to apply downward forces when the rotor blade 3 is in the given position 42. A sensor 54 can be used to monitor the actual movement of the actuator 53.

In step S7 the actuators are connected to the control unit 39 by connecting a hydraulic piping to the respective connector 63.

In step S8 the actuators 27 to 34 are controlled to pull the end face 7 of the blade root 8 against the contact surface 64 of the blade bearing 9 and the remaining holding bolts 11 a removed. Therefore, the rotor blade is held in position by the actuators 27 to 34.

In step S9 the actuators 27 to 34 are controlled to lower the rotor blade 3 to the position shown in fig. 1. In the example this can be achieved by pushing fluid into the hydraulic cylinders of the actuators 31 to 34 and by releasing fluid from the hydraulic cylinders 27 to 30. The pressure in the respective hydraulic cylinder corresponds to the pushing or pulling force exerted by the respective actuator 27 to 31. As already discussed above, the two groups 35, 36 of actuators 27 to 34 apply forces in opposite directions during the lowering of the rotor blade 3 to compensate the torque 26.

To reduce the complexity of the control and the number of required hydraulic pumps, multiple actuators 27 to 32 within a given group can be attached to a common hydraulic pump, in particular by a parallel connection. In the example a separate hydraulic connection and pump (not shown) is used for four pairs of actuators, namely for the pair of the actuators 27 and 28, for the pair of the actuators 29 and 30, for the pair of the actuators 31 and 32, and for the pair of the actuators 33 and 34. Preferably one of the actuators 27 to 34 of each pair of commonly controlled actuators 27 to 31 can have a sensor 54 to monitor the actual movement of that actuator 27 to 34 and to use this data, e.g., for a control feedback loop.

The lifting of the rotor blade 3 or in general any further variations of the distance 6 between the end face 7 of the blade root 8 and the contact surface 64 of the blade bearing 9 can then be performed by adding or removing fluid from the hydraulic cylinders as discussed with reference to step S9.

Once the rotor blade 3 is returned to the original position, the steps S8 to S2 can than essentially be performed in reverse order to uninstall the actuators 27 to 34 and reinstall the holding bolts 11.

It should be noted, that the mounting of the actuators 27 to 34 in the steps S2 to S8 is only necessary, when the actuators are not present during the normal operation of the wind turbine.

Fig. 6 discloses a flow chart for a method for servicing a rotor blade 3 of a wind turbine 1. In general, the method comprises the lowering the rotor blade 3 to expose the end face 7 of the blade root 8 in step S14, the servicing of the end face 7 of the blade root 8, while the rotor blade 3 is coupled to the blade bearing 9 via the actuators 27 to 34, in steps S17 to S20, and the lifting the rotor blade using the actuators 27 to 34 to move the end face 7 of the blade root 8 into contact with the contact surface 64 in step S21. The further steps and the use of all but one of the servicing steps are optional, but the inclusion of these steps or at least some of the optional steps leads to an especially advantageous embodiment. While the use of the multiple actuators 27 to 34 is assumed and advantageous in this example, a different approach to lowering the rotor blade 3 to expose the end face 7 and to rise the rotor blade 3 could be used in an alternate embodiment.

In the concrete embodiment shown in fig. 6, the method starts with the wind turbine 1 in the normal operating condition, wherein neither the actuators 27-34 nor the service platform 25 is installed and the rotor blade 3 is attached to the blade bearing 9 via a multitude of holding bolts 11.

In step S10 the rotor 2 of the wind turbine 1 is rotated to achieve an approximately horizontal orientation of the rotor blade 3. Specifically, at least the rotational axis 92 of the blade bearing 9 and/or the blade root 8 can be oriented essentially parallel to the cross-wind direction 16. In this orientation, service personal 24 can access the interior of the rotor blade via the service opening 65 of the blade bearing 9 or more specifically of the support plates 19, 20 shown in fig. 2 and work there without the need of a complex support structure.

In step S11 the work platform 25 is moved into the interior space 66 of the rotor blade 3, while the work platform is deflated. The inner volume 67 shown in fig. 1 is therefore collapsed and the work platform is rather compact and easily fits through a typical service opening 65.

In step S12 the work platform is inflated and arranged into the position shown in fig. 1, e.g., by pushing it towards the tip of the rotor blade 3. Since the rotor blade 3 is still oriented approximately horizontally in this step, the work platform forms a vertical wall. It can be held in place by frictional forces. Preferably the work platform is additionally secured by straps (not shown) or other means to the blade bearing 9.

Once the service personal 24 has left the interior space 66 and the area of the rotor 2, the rotor can be rotated in step S13 to change the orientation of the rotor blade 3 to the given orientation 24, in which the rotor blade 3 is essentially extending vertically downward.

The rotor blade 3 can than be lowered to expose the end face 7 of the blade root 8. The lowering of the rotor blade 3 in step S14 can be achieved by performing the Steps S2 to S9 of the method previously discussed with reference to fig. 3. It would however be possible in an alternate embodiment, to use a different method for lowering the blade by using at least one actuator. It would, e.g., be possible to only use actuators exerting upward forces, when the torque 26 is expected to be sufficiently small and/or sufficiently robust actuating bolts 37, 38 are used.

In step S15 spacers are inserted between the end face 7 of the blade root 8 and the contact surface 64 of the blade bearing 9. To place the spacers, service personal 24 can reenter the interior space 66 of the rotor blade 3 and preferably work while standing on the work platform 25.

An example for the placement of such a spacer 68 is shown in fig. 7. To allow for a robust positioning of the spacer 68, the spacer 68 has a W-shape with two recesses 70 that each receive a respective one of the actuating bolts 37 discussed above. Due to this shape the spacer can be inserted by moving it in the radial direction 22. The thickness of the spacer orthogonal to the image plane is chosen in such a way, that it is equal to the distance 6 between the end face 7 and the contact surface 64 used during the later servicing steps. To allow for an easy insertion of the spacer, the initial distance 6 after step S 14 can be chosen to be slightly larger than the thickness of the spacer. Instead of a single thick spacer, a stack of thinner spacers could be used.

As seen in fig. 7, a large part of the end face 7 surrounding multiple open holes 69 remains accessible even after installing the spacer 68. It is therefore typically possible to find a placement of the spacers 68 that allows a servicing of all relevant, e.g., damaged areas of the end face 7 without changing the spacer positions. If necessary, spacers can however be moved and/or temporarily not used to reach all relevant areas.

In step S16 the actuators 27-34 are controlled to slightly rise the rotor blade 3 and therefore clamp the spacers 68 between the end face 7 and the contact surface 64. Preferably low clamping forces are used, since this the clamping only serves to suppress an accidental movement of the spacers 68 by wind or the service personal 24.

In step S17 the end face 7 is cleaned by the service personal 24, in particular to remove any grease or lubricant.

In step S18 a milling of an area 71 of the end face 7 is performed to remove damaged material from the blade root 8, as schematically shown in fig. 8. It is assumed, that the area 72 immediately next to an open hole 69 is not damaged, since the open holes 69 are used for attaching the holding bolts 11 during the normal operation of the wind turbine 11 and the areas 72 next to these open holes 69 are therefore tightly pressed against the contact surface 64 of the blade bearing 9 and can therefore not be covered by the lubricant of the blade bearing 9 during the operation of the wind turbine 1. Therefore, the open holes 69 and the surrounding areas 71 can be used as reference during the milling.

The milling is performed in the example by using a milling device 73 having a protrusion 74 that is inserted into a respective one of the open holes 69 prior to the milling to define the position of the milling device 73 and therefore the area 71 of the end face 7 of the blade root 8 in which the milling is to be performed. In the example the protrusion 74 is a protrusion of a disc 75 carrying the milling means 71 and rotated by a motor 77. Since the milled area 71 has a rotational symmetry in this case, a change of the orientation of the milling device 73 with respect to the rotational axis 78 of the disc does not change the milling area and the use of additional guiding means to fix this orientation are therefore not necessary.

It should be noted, that while the motor 77 is shown above the disc 75 in the example of fig.8 for simplicity's sake, it can be advantageous to use a motor that is offset orthogonal to the image plane of fig. 8 and that can therefore be located outside of the gap between the end face 7 and the contact surface 64. Appropriate gearing can then be used to transmit the torque of the motor 77 to the disc 75. This can reduce the distance 6 between the end face 7 and the contact surface 64 that is necessary to perform the milling.

To protect the inner surface 79 of the hole 69 and the area 72 from being damaged by the rotating disc 75 and its protrusion, a guide bushing 80 is inserted into the open hole 69 prior to the milling. The guide bushing 80 comprises a hollow cylinder 81 that is inserted into the open hole 69, and a flat, in particular ring shaped, area 82 extending radially outward from one end of the cylinder 81. The flat area 82 of the guide bushing 80 is placed on top of the area 72 of the end face 7 surrounding the hole 69. The protrusion 74 of the milling device 73 is then inserted into the hollow cylinder 81 and the motor 77 is started to start the drilling.

In the example, the milling device is manually moved towards the end face 7 by the service personal 24. The milling depth 85 is defined by the distance between a stop 84 formed by the flat area 82 of the guide bushing 80 and a reference surface 83 of the milling device. This allows an accurate milling to a given depth 85, even when manually moving the milling device 73 to perform the milling.

In alternate embodiments, various features of milling device 73 could be modified. Instead of the single protrusion 74, two or more protrusions of the milling device could be inserted into different open holes 69. In this case the protrusions can, e.g., be part of a body of the milling device that carries moveable milling means, e.g., a rotating disc. Since the protrusions would not be rotating in this case, the use of a guide bushing in not necessary. Alternatively or additionally, the milling means could be moved by an actuator of the milling device in the direction of the blade root 5 and the movement could be controlled by a sensor. This would allow for an automatic control of the milling depth and the use of a mechanical stop would be optional in this case.

After the milling is performed in all relevant areas, a coating can be applied to the end face 7 of the blade root 8 in step S19. By applying the coating, future damage to the end face 7 can be avoided or at least reduced. The coating can be an epoxy resin or another two-component adhesive, e.g., Araldite^{®} 2022. The coating can be manually applied by the service personal 24, e.g., by using a spatula.

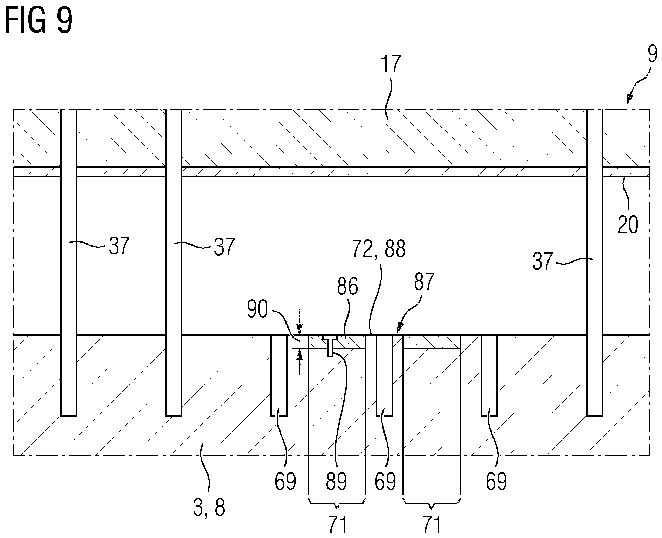

After the coating is completely dried and preferably no longer sticky, a shim plate 86 is attached to the end face 7 in the milled area 71 is step S20, as shown in fig. 9. Fig.9 shows the use of a single shim plate 86, that does however have a hole 87 for the protrusion 88 surrounding the open hole 69 formed by the area 72 in which no milling was performed. The thickness 90 of the shim plate 86 matches the milling depth 85. The shim plate 86 is mechanically attached to the blade root 8 using a screw 89.

After the servicing of the end face 7 of the blade root 8 is finished, the rotor blade can be reattached to the blade bearing 9 by the holding bolts 11 in step 21. This step can comprise the lifting of the rotor blade to its original position, after removing the spacers 68 and after the service personal 24 has left the interior space 66, the attachment of the rotor blade 3 to the bearing 9 by holding bolts 11 mounted in all of the open holes 69, the unmounting of the actuators 27 to 34 and the mounting of holding bolts 11 in the remaining holes 43 to 46.

In step S22 the work platform 25 can then be uninstalled. This can, e.g., be achieved by firstly rotating the rotor 2 until the rotor blade is in an approximately horizontal orientation, such that service personal 24 can work in the interior space 66 without the need of the work platform. The work platform can then be deflated and removed through the service opening 65 by the service personal 24.

The wind turbine 1 is than once again in an operational state and its operation can resume. Compared to a complete detachment of the rotor blade 3 for servicing the end face 7 on the ground, less down time is required and the use of a crane or jack-up vessel is not required, when the discussed approach is used.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

## Claims

1. Method for lowering and/or lifting a rotor blade (3) of a wind turbine (1) to change the distance (6) between an end face (7) of a blade root (8) of the rotor blade (3) and a contact surface (64) of a blade bearing (8) of the rotor blade (3), in particular for the purpose of servicing the rotor blade (3), comprising the steps of
providing multiple actuators (27-34), in particular at least four actuators (27-34),
each actuator (27-34) having a first portion (48), in particular a hydraulic cylinder, and a second portion (49), in particular a piston, wherein the second portion (49) is moveable in a respective actuator movement direction (50, 55) with respect to the first portion (48) by controlling the actuator (27-34),
wherein the respective first portion (48) is coupled to the blade bearing (9) and the respective second portion (49) is coupled to the rotor blade (3) in such a way that all actuator movement directions (50, 55) deviate by less than 20° or less than 10° or less than 5° from the vertical direction (14, 15) when the rotor blade is in a given orientation (42),
controlling the actuators (27-34) to lower and/or rise the rotor blade (3) while the rotor blade (3) is in the given orientation (42) in such a way
that a first group (35) of the actuators (27-34) each exert a vertical upward force on a first circumferential section (40) of the blade root (8),
and that a second group (36) of the actuators (27-34) exerts a vertical downward force on a second circumferential section (41) of the blade root (8).

2. Method according to claim 1,
wherein in the given orientation (42) of the rotor blade (3) the first portion (48) of each actuator (27-30) in the first group (35)
is on the one hand arranged vertically below at least a part of the second portion (49) of the respective actuator (27-30), and/or
has on the other hand a first portion end face (52) that is facing vertically downward and that is supported by a support plate (51) that is in turn supported by the blade bearing (9), and/or
wherein in the given orientation (42) of the rotor blade (3) the first portion (48) of each actuator (31-34) in the second group (36)
is on the one hand arranged vertically above at least a part of the second portion (49) of the respective actuator (31-34) and/or
has on the other hand a first portion end face (56) that is facing vertically upward and that is supported by a support plate (91) that is in turn attached to the blade bearing (9).

3. Method according to claim 1 or 2,
wherein the respective second component (49) of the respective actuator (27-34) is coupled to the rotor blade (3) via at least one actuating bolt (37, 38) that extends through a respective hole (43, 44) of the blade bearing (9), and
wherein the actuating bolt (37, 38) is movable with respect to the hole (43, 44) in the movement direction (50, 55) of the respective actuator (27-34).

4. Method according to claim 3,
wherein the rotor blade (3) is coupled to the blade bearing (9) by multiple holding bolts (11) during the normal operation of the wind turbine (1), the respective holding bolt (11) extending through a respective hole (43-46) in the blade bearing (9), and
wherein the step of providing the multiple actuators (27-34) comprises the sub-steps of:
removing a subgroup of the holding bolts (11) from the respective holes (43-46), and
passing a respective actuating bolt (37, 38) through at least some of the holes (43-46) of the subgroup and connecting the respective actuating bolt (37, 38) to the rotor blade.

5. Method according to claim 4,
wherein the step of providing the actuators (27-34) comprises the additional sub-step of inserting and anchoring a respective expansion anchor (58) into at least some of the holes (43-46) of the subgroup not used for the actuating bolts (37, 38),
wherein the respective first part (48) of the actuators (30-34) of the second group (36) is coupled to the rotor bearing (9) via at least one of the expansion anchors (58).

6. Method according to one of the preceding claims, wherein a respective sensor (54) is used to measure the respective relative position of the first and second portion (48, 49) of at least two of the actuators (27-34), in particular of at least one respective actuator (27-34) of the first and second group (35, 36), wherein the actuators (27-34) are controlled based on the measured relative positions.

7. System for lowering and/or lifting a rotor blade (3) of a wind turbine (1) to change the distance (6) between an end face (7) of a blade root (8) of the rotor blade (3) and a contact surface (64) of a blade bearing (8) of the rotor blade (3), in particular for the purpose of servicing the rotor blade (3), comprising
multiple actuators (27-34), in particular at least four actuators (27-34), each actuator (27-34) having a first portion (48), in particular a hydraulic cylinder, and a second portion (49), in particular a piston, wherein the second portion (49) is moveable in a respective actuator movement direction (50, 55) with respect to the first portion (48) by controlling the actuator (27-34), and
a control unit (39) configured for controlling the actuators (27-34) to lower and/or rise the rotor blade (3) while the rotor blade (3) is in the given orientation (42) such
that a first group (35) of the actuators (27-34) each exert a vertical upward force on a first circumferential section (40) of the blade root (8), and
that a second group (36) of the actuators (27-34) exerts a vertical downward force on a second circumferential section (41) of the blade root (8),
when the system is installed in the wind turbine in such a way that the respective first portion (48) of each actuator (27-34) is coupled to the blade bearing (9) and the respective second portion (49) is coupled to the rotor blade (3) in such a way that all actuator movement directions (50, 55) deviate by less than 20° or less than 10° or less than 5° from the vertical direction (14, 15) when the rotor blade is in a given orientation (42).

8. Wind turbine comprising at least one rotor blade (3) having a blade root (8) and an end face (7) of the blade root (8) and a rotor bearing (9) having a contact surface (64) that is contacting the end face (7) during the normal operation of the wind turbine (1), wherein the system according to claim 7 part of the wind turbine (1) and installed in such a way that the respective first portion (48) of each actuator (27-34) is coupled to the blade bearing (9) and the respective second portion (49) is coupled to the rotor blade (3) in such a way that all actuator movement directions (50, 55) deviate by less than 20° or less than 10° or less than 5° from the vertical direction (14, 15) when the rotor blade is in the given orientation (42).

9. Method for servicing a rotor blade of a wind turbine, comprising the steps of
lowering the rotor blade (3) to expose an end face (7) of a blade root (8) of the rotor blade (3) that is contacting a contact surface (64) of a blade bearing (9) of the wind turbine (1) during the normal operation of the wind turbine (1),
wherein the blade (3) is lowered using at least one actuator (27-34), the actuator (27-34) having a first portion (48) that is coupled to the blade bearing (9) of the rotor blade (3) and a second portion (49) that is coupled to the rotor blade (3),
servicing the end face (7) of the blade root (8) while the rotor blade (3) is coupled to the blade bearing (9) via the actuator (27-34), wherein in particular the servicing of the end face (7) of the blade root (8) comprises a cleaning and/or milling and/or coating of the end face (7), and
lifting the rotor blade (3) using the actuator (27-34) to move the end face (7) of the blade root (8) into contact with the contact surface (64)
wherein in particular the lowering and/or the lifting of the rotor blade (3) is performed using the method for lowering and/or lifting a rotor blade (3) of a wind turbine (1) according to one of the claims 1 to 6.

10. Method according to claim 9,
wherein the rotor blade (3) is coupled to the blade bearing (9) by multiple holding bolts (11) during the normal operation of the wind turbine (11), the respective holding bolt (11) extending into holes (69) of the end face (7) of the blade root (8),
wherein at least some of the holding bolts (11) are removed, in particular prior to the lowering of the rotor blade (3), leaving at least some of the holes (69) of the end face (7) of the blade root (8) open, and
wherein the milling is performed using a milling device (73) having at least one protrusion (74), wherein the respective protrusion (74) is inserted into a respective one of the open holes (69) prior to the milling to define the position of the milling device (73) and therefore the area (71) of the end face (7) of the blade root (8) in which the milling is performed.

11. Method according to claim 10,
wherein a guide bushing (80) is inserted into the respective open hole (69) of the end face (7) of the blade root (8), the guide bushing (80) comprising a hollow cylinder (81) that is inserted into the open hole (69), and a flat, in particular ring shaped, area (82) extending radially outward from one end of the cylinder (81) that is placed on top of the area (72) of the end face (7) surrounding the hole (69), and
wherein the respective protrusion (74) of the milling device (73) is inserted into the hollow cylinder (81) to insert the protrusion (74) into the respective open hole (69).

12. Method according to one of the claims 9 to 11,
wherein the servicing of the end face (7) of the blade root (8) comprises the attachment of at least one shim plate (86) to the end face (7) of the blade root (8), and
wherein the shim plate (86) is in particular attached to an area (71) of the end face (7) in which material of the end face (7) was removed by milling in a previous sub-step of the step of servicing the end face (7) of the blade root (8) to replace the removed material.

13. Method according to one of the claims 9 to 12, wherein the method comprises the additional step of installing a work platform (25) inside the rotor blade (3) prior to lowering the rotor blade (3) and/or the additional step of uninstalling the work platform (25) after the lifting the rotor blade (3).

14. Method according to claim 13,
wherein the installed work platform (25) is inflatable or comprises an inflatable component,
wherein the work platform (25) is moved to the rotor blade (3) during the step of installing and/or removed from the rotor blade (3) during the step of uninstalling the work platform (25) in a deflated state of the work platform (25) or the inflatable component, and
wherein the work platform (25) or the inflatable component is inflated during the step of installing and/or deflated during the step of uninstalling of the work platform (25).

15. Method according to one of the claims 9 to 14, where the method comprises the additional steps of
arranging at least one spacer (68) between the end face (7) of the blade root (8) and the contact surface (64) of the blade bearing (9) after lowering the rotor blade (3) and before servicing the end face (7) of the blade root (8), and
removing the at least one spacer (68) before lifting the rotor blade (3) after the servicing of the end face (7).
